Europäisches Patentamt

European Patent Office

Office européen des brevets

(19)

(11) Veröffentlichungsnummer: **0 271 640 B1**

(12) **EUROPÄISCHE PATENTSCHRIFT**

(45) Veröffentlichungstag der Patentschrift: **17.04.91**

(51) Int. Cl.<sup>5</sup>: **B05B 12/00**, B05B 9/047, G01F 11/08

(21) Anmeldenummer: **87112610.8**

(22) Anmeldetag: **29.08.87**

(54) **Einrichtung zum dosierten Ausspritzen viskoser Medien.**

(30) Priorität: **17.12.86 DE 8633671 U**

(43) Veröffentlichungstag der Anmeldung:
**22.06.88 Patentblatt 88/25**

(45) Bekanntmachung des Hinweises auf die Patenterteilung:
**17.04.91 Patentblatt 91/16**

(84) Benannte Vertragsstaaten:
**BE DE ES FR GB IT NL SE**

(56) Entgegenhaltungen:
**FR-A- 2 411 797**
**US-A- 4 594 057**

(73) Patentinhaber: **VEGLA Vereinigte Glaswerke GmbH**
**Viktoriaallee 3-5**
**W-5100 Aachen(DE)**

(72) Erfinder: **Cornils, Gerd**
**Dechant-Fabry-Str. 48**
**W-5161 Merzenich-Girbelsrath(DE)**

(74) Vertreter: **Liermann, Manfred**
**Schillingsstrasse 335**
**W-5160 Düren(DE)**

EP 0 271 640 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Einrichtung zum dosierten Ausspritzen viskoser Medien mit mindestens einer Ausspritzdüse und einem Vorratsbehälter mit einer inneren Trennung zwischen Vorrats- und Verdrängungsseite, der mit einer Verdrängungseinrichtung verbunden ist, wobei die Verdrängungsmenge pro Zeit oder Weg mittels der Verdrängungseinrichtung bestimmbar ist.

Einrichtungen der oben beschriebenen Art sind vom Anmelder selbst gebaut und in Verkehr gebracht worden. Sie werden eingesetzt beispielsweise zur Aufbringung streifenförmiger Beschichtungen an Bauteilen, wie z. B. zum Aufbringen des Dichtrandes an Kraftfahrzeugwindschutzscheiben. Solche Einrichtungen haben sich für den genannten Zweck in der Praxis durchaus gut bewährt. Es wird bei diesen Einrichtungen von einem einarmigen, ortsfesten Manipulator eine Ausspritzdüse entlang einer vorgegebenen Bahn verfahren und hierbei gleichzeitig aus der Ausspritzdüse das in aller Regel hochviskose Material ausgespritzt. Da das auszuspritzende Material sehr genau dosiert werden muß und hierbei die Geschwindigkeit der Ausspritzdüse entlang der vorgegebenen Bahn beachtet werden muß, ist der Einsatz einer kontrollierbaren Dosiereinrichtung notwendig. Diese Dosiereinrichtung besteht im Stand der Technik aus einem zylinderförmigen Behälter mit einem darin angeordneten, verschiebbaren Kolben. Dieser zylinderförmige Behälter wird aus einem Vorratsfaß, welches das auszuspritzende Medium enthält, über eine Leitung mittels einer Faßpumpe gefüllt, wobei der genannte Kolben ausgetrieben wird. Der genannte Zylinderraum ist ebenfalls - hierzu sind entsprechende Wegeventile vorgesehen - über eine großzügig bemessene, flexible Schlauchleitung mit der Ausspritzdüse verbunden. Ist der Zylinder über die entsprechende Wegeventilschaltung auf die Ausspritzdüse geschaltet, so kann über eine von einem Elektromotor bewegte Gewindespindel der Kolben wieder in den Zylinder eingedrückt und hierdurch das dort vorhandene Medium über die genannte flexible Schlauchleitung zur Ausspritzdüse transportiert und dort ausgespritzt werden. Über die Geschwindigkeit der Gewindespindel ist die auszuspritzende Menge dosierbar. Hierbei ist die Geschwindigkeit der Gewindespindel problemlos und präzise regelbar. Dennoch bleibt bei den Einrichtungen des Standes der Technik die präzise Dosierung insbesondere bei Geschwindigkeitsänderungen, beispielsweise dann, wenn die Ausspritzdüse von der geraden in eine kurvenförmige Bahn wechselt, schwierig, weil sich herausgestellt hat, daß Geschwindigkeitsänderungen an der die Auspressung bewirkenden Gewindespindel oder Geschwindigkeitsänderungen äquivalenter Elemente sich nur verzögert in einer Veränderung der ausgespritzten Masse pro Zeit auswirken. Die Größe dieser Verzögerung muß daher festgestellt werden für jeden einzelnen, vorbestimmten, von der Ausspritzdüse abzufahrenden Wegtypzyklus. Hierbei ist die genannte Verzögerung zusätzlich abhängig von der Viskosität des auszuspritzenden Mediums. Die notwendigerweise sehr groß bemessene flexible Leitung zwischen Verdrängungseinrichtung und Ausspritzdüse ist zudem hinderlich bei der Führung der Ausspritzdüse.

Der Erfindung liegt damit die Aufgabe zugrunde, eine Einrichtung der eingangs beschriebenen Art vorzuschlagen, die in ihrem Aufbau einfacher gehalten werden kann und die gleichzeitig die beschriebenen Dosierunsicherheiten nicht mehr aufweist.

Diese Aufgabe ist erfindungsgemäß gelöst durch mindestens einen bewegbaren Vorratsbehälter mit je einer Ausspritzdüse, durch mindestens einen mit einer Versorgungsstation verbundenen oder verbindbaren Füllanschluß, welch jeder mit einem von einer Transporteinrichtung auch zusammen mit der Ausspritzdüse bewegbaren Vorratsbehälter lösbar verbunden werden kann. Der jeweilige Vorratsbehälter mit Ausspritzdüse bildet eine Baueinheit, die klein und einfach zu handhaben ist. Die große, flexible und elastische Schlauchverbindung zwischen Verdrängungseinrichtung und Vorratsbehälter, in der das auszuspritzende Medium von der Verdrängungseinrichtung zum Vorratsbehälter transportiert wurde, ist entfallen. Auszuspritzendes Medium im Vorratsbehälter und Ausspritzdüse sind nunmehr unmittelbar benachbart. Es kann der jeweilige Vorratsbehälter leergespritzt und dann zu einer Füllstation zum erneuten Auffüllen transportiert werden. Der Aufbau der Einrichtung hat sich damit stark vereinfacht und es ist vor allen Dingen die bisherige Dosierunsicherheit beseitigt.

Nach einer Ausgestaltung der Erfindung ist vorgeschlagen, daß zwischen Füllanschluß und Versorgungsstation mindestens ein Füllventil vorgesehen ist. Hierdurch ist eine saubere Trennung von Beginn und Ende des Füllvorgangs möglich und es kann außerdem bei mehreren Füllstationen auf die jeweils zu bedienende Station geschaltet werden.

Eine andere Ausgestaltung der Erfindung sieht mindestens eine Transporteinrichtung vor, mit welcher mindestens ein Vorratsbehälter so positionierbar ist, daß er über den Füllanschluß gefüllt werden kann. Bei dieser Anordnung kann die Transporteinrichtung, die den Vorratsbehälter mit der Ausspritzdüse bewegt, auch dazu benutzt werden, den Vorratsbehälter zur Füllstation zu bringen und mit dem Füllanschluß so zu verbinden, daß eine Füllung erfolgen kann. Es ist jedoch insbesondere dann, wenn der Vorratsbehälter mit Spritzdüse stationär angeordnet sein sollte, ebenso umgekehrt möglich, den jeweiligen Füllanschluß über eine flexible Leitung mit der Versorgungsstation zu verbinden und dann den Füllanschluß zur Ausspritzdüse mit dem Vorratsbehälter zu bringen und dort die notwendige Füllverbindung herzustellen. Das bedeutet, daß die Transporteinrichtung nicht zwingend den Vorratsbehälter positionieren muß, sondern daß eine vorhandene Transporteinrichtung durchaus auch zusätzlich oder allein die Füllanschlüsse in die richtige Füllposition verfahren kann.

Ergänzend ist nach der Erfindung vorgeschlagen, daß als Vorratsbehälter ein handelsüblicher Druckspeicher verwendet wird. Solche Einrichtungen haben sich in der Massenanwendung bewährt, sind trotz hoher Druckfestigkeit leicht und handlich. Sie sind preiswert und als Ersatzteil jederzeit aus dem Lager des Herstellers zu beziehen.

In weiterer Ausgestaltung der Erfindung sind mindestens zwei mit einer Versorgungsstation verbundene oder verbindbare Füllanschlüsse vorgesehen sowie mindestens eine Transporteinrichtung und mindestens zwei Vorratsbehälter zur Füllung mindestens eines Vorratsbehälters, während ein anderer Vorratsbehälter gleichzeitig entleert werden kann. Hierdurch steht im Wechsel immer ein gefüllter Vorratsbehälter zur Verfügung. Hierbei ist auch denkbar, daß die Vorratsbehälter jeweils unterschiedliche Medien enthalten, also mit unterschiedlichen Medien gefüllt werden. Dies bedeutet natürlich, daß auch Versorgungsstationen mit unterschiedlichen Medien vorhanden sein müssen.

Weiterhin ist nach der Erfindung vorgesehen, daß die Füllanschlüsse an einem von der Transporteinrichtung erreichbaren Ort in der Einrichtung vorgesehen sind. Die Transporteinrichtung muß dann nicht zusätzliche Eigenschaften zur Erreichung der Füllstationen aufweisen, sondern kann in ihren technischen Möglichkeiten beschränkt bleiben auf den für ihren eigentlichen Einsatz notwendigen Umfang. Es soll also vermieden werden, daß die Transporteinrichtung zusätzliche Merkmale aufweisen muß, ausschließlich um die Füllstationen zu erreichen.

Ergänzend ist dann nach der Erfindung noch vorgeschlagen, daß jeder Vorratsbehälter über eine flexible Leitung mit der Verdrängungseinrichtung verbunden ist. Hierdurch kann die Verdrängungseinrichtung stationär angeordnet sein. Im Gegensatz zum Stand der Technik verdrängt jetzt die Verdrängungseinrichtung selbst nicht mehr direkt das auszuspritzende Medium, sondern nur noch indirekt. Die Verdrängungseinrichtung ist nämlich über die Trennung im Vorratsbehälter vom Vorratsraum des Vorratsbehälters getrennt. Die Verdrängungseinrichtung kann daher über die genannte flexible Leitung ein inkompressibles Medium, wie z. B. Hydrauliköl, verdrängen, so daß im Vorratsraum des Vorratsbehälters ein ebensogroßes Raumvolumen verdrängt wird wie in der Verdrängungseinrichtung. Das inkompressible Medium überträgt eine Verdrängung verzögerungsfrei von der Verdrängungseinrichtung zum Vorratsbehälter und dies in gleicher Volumengröße. Die flexible Leitung kann hierdurch dünn und beweglich gehalten werden, so daß eine nennenswerte Behinderung von dieser Leitung nicht mehr ausgeht. Hier ist für jeden einzelnen Vorratsbehälter vorzugsweise auch eine separate Verdrängungseinrichtung vorzusehen.

Es ist dann ergänzend vorgeschlagen, daß die Verdrängungseinrichtung einen beweglichen, betätigbaren Verdrängungskörper aufweist, wobei der Raum zwischen Verdrängungskörper und Verdrängungsseite des Vorratsbehälters andererseits mit einem im wesentlichen inkompressiblen Medium gefüllt ist, wie das oben bereits erläutert wurde. Eine Verschiebung des Verdrängungskörpers wird über das inkompressible Medium verzögerungsfrei und in gleicher Volumengröße auf die Vorratskammer des Vorratsbehälters übertragen. Mit einer entsprechenden Betätigung des Verdrängungskörpers läßt sich daher sehr präzise und ohne Verzögerung das Ausspritzvolumen pro Zeiteinheit beeinflussen.In weiterer Ergänzung ist dann nach der Erfindung noch vorgeschlagen, daß das verdrängbare Volumen eines jeden Vorratsbehälters dem Bedarf für einen zugeordneten Arbeitszyklus entspricht. Hierdurch können die Vorratsbehälter so klein wie möglich und handlich gehalten werden. Nach jedem Durchgang werden sie neu gefüllt, und es ist hierdurch gewährleistet, daß für den notwendigen Arbeitszyklus immer ausreichend auszuspritzendes Medium zur Verfügung steht.

Eine andere ergänzende Ausgestaltung der Erfindung sieht vor, daß die Verdrängungseinrichtung mindestens einen Strömungsmittelzylinder aufweist, mit mindestens einem beweglichen Kolben als Verdrängungskörper. Dies ist eine konstruktiv einfach zu realisierende Möglichkeit für eine gut funktionsfähige und einfach zu regelnde Verdrängungseinrichtung. Die notwendigen Bauelemente können zudem Serienbauteile sein, die als solche somit bewährt und wenig störanfällig sind und als Ersatzteile jederzeit aus dem Vorratslager eines Herstellers erreichbar sind.

Es ist dann weiter vorgesehen, daß der Strömungsmittelzylinder mindestens eine mit dem Kolben verbundene Kolbenstange aufweist, zur Abtastung des Verdrängungsweges des Kolbens und/oder zur Verbindung mit einem Verschiebemotor. Hierdurch kann das Verdrängungsvolumen und/oder eine Verdrängungsgrenzlage leicht erfaßt werden. Die Kolbenstange kann hierbei auch z. B. zusätzlich zur Verbindung beispielsweise mit einer von einem Elektromotor angetriebenen Kugelrollspindel verwendet werden, mit der Dosierweg und Dosiergeschwindigkeit bestimmt werden sollen.

In weiterer Ausgestaltung der Erfindung ist vorgeschlagen, daß der der Verdrängerseite abgewandte Zylinderraum über ein Mengenregelventil mit einer Strömungsmittelpumpe verbunden ist. Dies ist eine alternative Form den Verdrängungsantrieb zu bewirken, die ebenfalls einfach im Aufbau und leicht beherrschbar ist.

Wiederum eine Ausgestaltung der Erfindung sieh vor, daß jeder Vorratsbehälter als handelsüblicher Druckspeicher mit zwei Kammern ausgebildet ist, dessen eine Kammer die Verdrängungsseite und dessen andere Kammer die Vorratsseite bildet. Es hat sich gezeigt, daß handelsübliche Druckspeicher sich als Vorratsbehälter für den hier vorgesehenen Zweck ausgezeichnet eignen. Sie weisen von Ihrer Bauart her bereits eine innere flexible Membran auf, und enthalten damit bereits die notwendige Trennung zwischen Vorratsseite und Verdrängungsseite. Da solche Druckspeicher auch für Hydraulikflüssigkeiten ausgelegt sind, ist der Einsatz von Hydrauliköl auf der Verdrängerseite völlig unproblematisch. Sie weisen außerdem trotz ihrer in der Regel sehr leichten Bauart die notwendige Druckfestigkeit auf und sind sehr preiswert.

Schließlich ist nach der Erfindung noch vorgesehen, daß als Transporteinrichtung ein stationärer Manipulator verwendet wird. Solche Manipulatoren, zum Teil auch mit der Bezeichnung "Roboter" belegt, sind vielfach in der Industrie bereits im Einsatz. Sie weisen die notwendige Bewegungsfähigkeit und die hier notwendige Tragfähigkeit auf. Lediglich ihre Greiforgane müssen an den zu greifenden Vorratsbehälter angepaßt sein

Die Erfindung soll nun anhand der beigefügten Zeichnungen, die ein Ausführungsbeispiel zeigen, näher erläutert werden.

Es zeigen:

Figur 1:     Schemaskizze des Aufbaus der neuerungsgemäßen Einrichtung

Figur 2     : Perspektivische Darstellung der Gesamteinrichtung nach Figur 1

Figur 3:     Einrichtung wie Figur 1, jedoch mit doppeltem Vorratsbehälter

Figur 4:     Perspektivisch Darstellung der gesamten Einrichtung nach Figur 3.

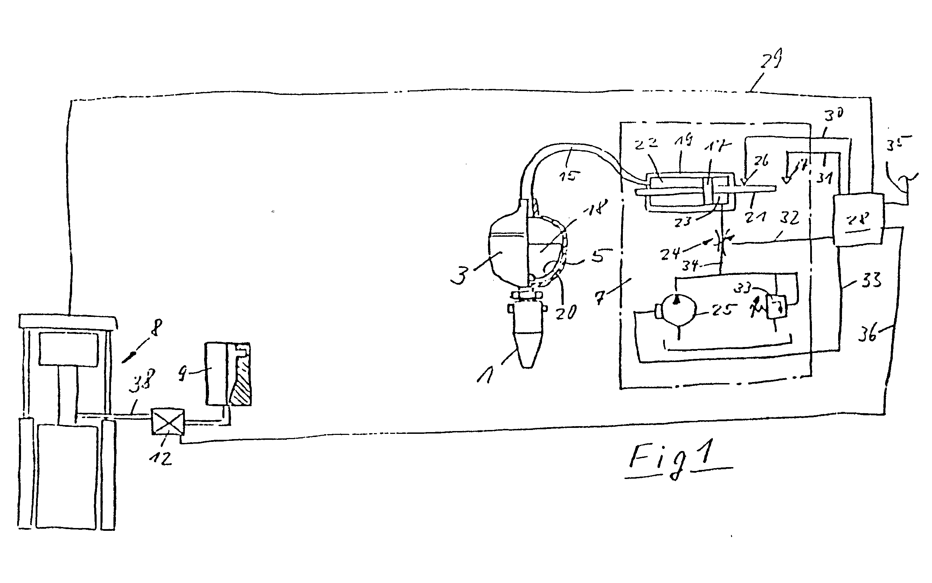

Figur 1 zeigt einen Vorratsbehälter 3, bei dem eine Verdrängungsseite 18 von einer Vorratskammer 20 durch eine Membran 5 getrennt ist. Die Kammer 20 mündet mit ihrem Ausgang in eine Ausspritzdüse 1. Es kann bei Bedarf zwischen der Kammer 20 und der Ausspritzdüse 1 noch ein hier nicht dargestelltes Ventil vorgesehen sein.

Die Verdrängungsseite 18 des Vorratsbehälters 3 ist über eine flexible Leitung 15 mit der Kammer 22 eines Strömungsmittelzylinders 19 verbunden. Kammer 22 und eine weitere Kammer 23 sind getrennt durch einen Kolben 17. Kolben 17 ist verbunden mit einer doppelten Kolbenstange, dessen eine Kolbenstange 21 beispielsweise zusammenwirkt mit zwei Endschaltern 26 and 27. Die Endschalter 26 und 27 können beispielsweise Grenzlagen für die Verdrängungsmenge darstellen. Zur Betätigung des Kolbens 17 ist die Kammer 23 über eine Leitung 34, in der ein Mengenregelventil 24 angeordnet ist, mit einer Strömungsmittelpumpe 25 verbunden. Das System ist gegen Überdruck abgesichert durch das Druckbegrenzungsventil 33.

Der Funktionsablauf der einzelnen Einrichtungen wird über eine Steuerung 28 koordiniert, sichergestellt und abgewickelt. Die Endschalter 26 und 27 sind hierzu mittels der Leitungen 30 und 31 mit der Steuerung 28 verbunden. Ebenso ist das Mengenregelventil 24 bzw. dessen Stelleinrichtung über die Leitung 32 mit der Steuerung 28 verbunden. Hierdurch kann die richtige Dosiergeschwindigkeit eingehalten und die jeweils festgelegten Grenzlagen ermittelt werden. So kann dies bedeuten, daß bei Befahren des Endschalters 26 - diese Information wird über die Leitung 30 an die Steuerung 28 gegeben - die Strömungsmittelpumpe 25 über die Steuerleitung 33 abgeschaltet wird. Es kann dann beispielsweise über die Steuerleitung 35 der Manipulator 11 oder die Transporteinrichtung 11 das Kommando bekommen, beispielsweise den Vorratsbehälter 3 zum Füllanschluß 9 zu fahren und dort die Ausspritzdüse 1 mit dem Füllanschluß 9 zur Durchführung einer Füllung zu verbinden. Ist diese Verbindung hergestellt, so kann die Faßpumpe über die Leitung 29 aktiviert werden. Über die Leitung 36 wird das Füllventil 12 geöffnet. Die Faßpumpe treibt dann das auszuspritzende Medium durch die Ausspritzdüse 1 in die Vorratskammer 20 und treibt damit auf der Verdrängungsseite 18 das Hydrauliköl über die flexible Leitung 15 wieder zurück in die Kammer 22 des Strömungsmittelzylinders 19, wodurch der Kolben 17 wieder nach rechts getrieben und die Kolbenstange 21 ausgefahren wird. Das aus der Kammer 23 verdrängte Öl kann entweder über eine nicht dargestellte separate Schaltung drucklos in den Tank geführt werden, oder aber durch eine in dem Mengenregelventil 24 üblicherweise vorhandene Umgehung, oder auch durch das Mengenregelventil 24 selbst zurück und über das Druckbegrenzungsventil 33 zum Tank geführt sein. Hierzu könnte das Druckbegrenzungsventil 33 auch automatisch so regelbar sein, daß für den Rückhub die Druckbegrenzung sehr niedrig gestellt wird. Solche Schaltungen aber sind ansich bekannt und nicht Gegenstand der Erfindung.

Wird nun der Endschalter 27 befahren, so kann die Steuerung 28 über die Leitung 29 die Fülleinrichtung wieder abschalten und über die Leitung 36 das Füllventil 12 wieder schließen. Die Transporteinrichtung 11 erhält nun eine Information darüber, daß der Vorratsbehälter 3 wieder gefüllt und abholbereit am Füllanschluß zur Verfügung steht. Hat die Transporteinrichtung den Vorratsbehälter 3 wieder übernommen bzw. in die Anfangsposition gefahren, so kann die Steuerung 28 über die Leitung 33 die Strömungsmittelpumpe 25 wieder einschalten und eine bedarfsgerechte Mengenregelung am Mengenregelventil 24 bewirken.

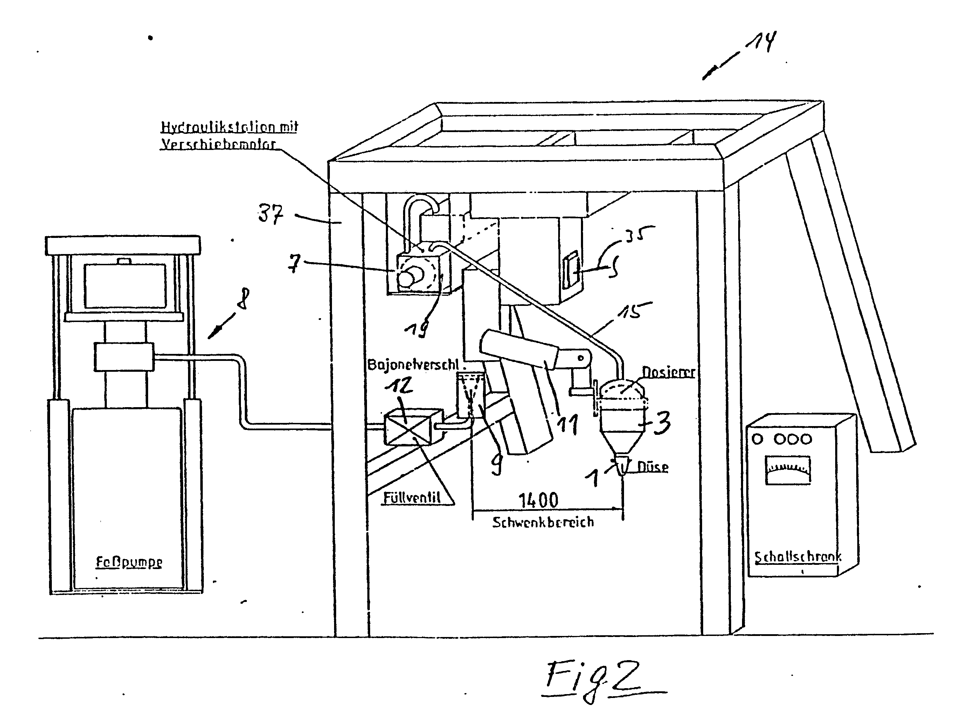

Die im wesentlichen aus dem Strömungsmittelzylinder 19 mit den zugehörigen Betätigungseinrichtungen, wie der Strömungsmittelpumpe 25 und dem Druckbegrenzungsventil 33 sowie dem Men-genregelventil 24 bestehende Verdrängungseinrich-tung 7 ist als Baugruppe zusammengefaßt und kann an einem Ständer 37, wie dies Figur 2 zeigt, angeordnet sein. Am gleichen Ständer kann in einer Anordnung wie in Figur 2 dargestellt, die Transporteinrichtung 11 in der Form beispielsweise eines einarmigen Manipulators angeordnet sein. Neben dem Ständer 37 ist die Versorgungsstation 8 mit dem Vorratsfaß und der zugehörigen Faßpumpe angeordnet, die mittels der Leitung 38 über das Füllventil 12 mit dem Füllanschluß 9 verbunden ist. Der in Figur 2 noch dargestellte Schaltschrank kann die Steuerung 28 umfassen, aber auch zusätzlich z. B. noch einen Rechner und Programiereinrichtungen für eine Wegprogramierung des Manipulators 11.

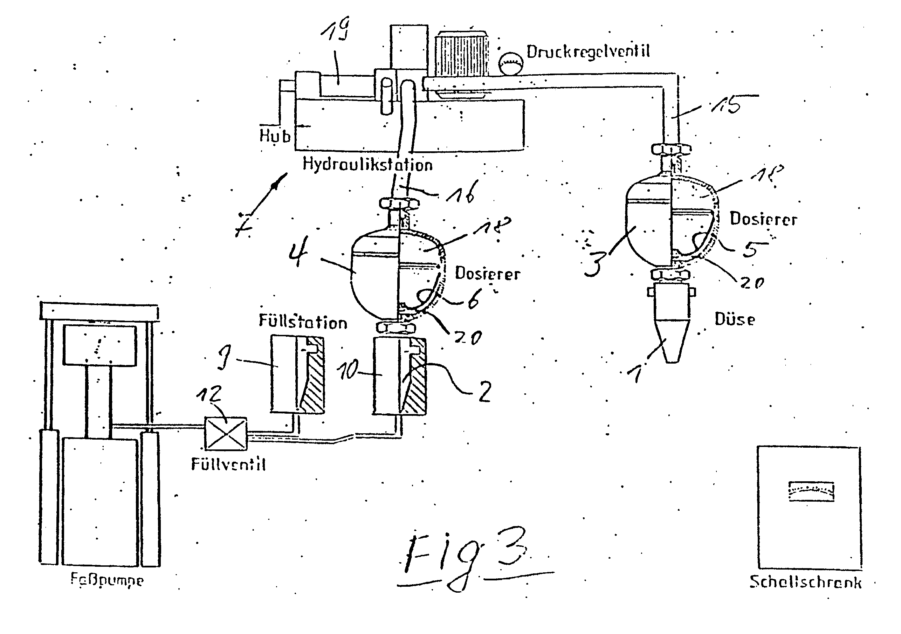

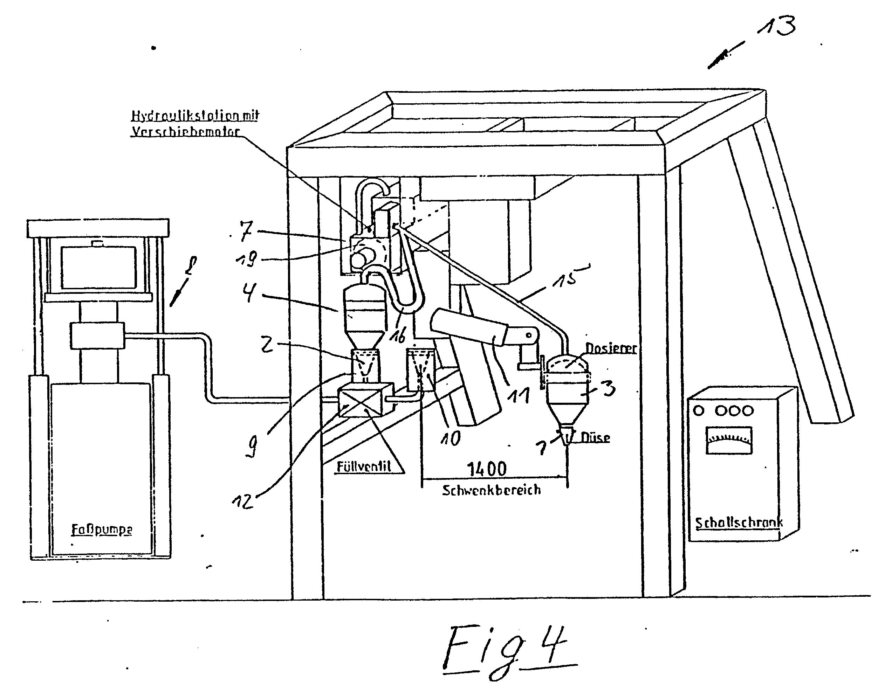

Die Figuren 3 und 4 zeigen lediglich eine einfache Modifizierung einer Einrichtung nach den Figuren 1 und 2. Die Ausführungsform nach Figur 3 entspricht in ihrem Aufbau der Ausführungsform nach Figur 1, ist jedoch im wesentlichen doppelt vorhanden. Statt der doppelten Anordnung kann auch eine Mehrfachanordnung vorgesehen sein. Hierbei ist es möglich, die einzelnen Füllstationen aus der gleichen Versorgungsstation zu speisen. Es ist aber auch möglich, mehrere Versorgungsstationen vorzusehen oder auch jeder einzelnen Füll-station eine separate Versorgungsstation zuzuord-nen. Hierbei können die Versorgungsstationen durchaus unterschiedliche auszuspritzende Medien enthalten. Die jeweiligen Vorratsbehälter müssen bei unterschiedlichen Medien den einzelnen Füllstationen exakt zugeordnet sein. Die Füllanschlüsse 9 und 10 sind dann den entsprechenden Vorratsbehältern 3 und 4 zugeordnet. Hierbei weist dann der Vorratsbehälter 3 die Trennung 5 und der Vorratsbehälter 4 die Trennung 6, im Ausführungsbeispiel jeweils als Membran ausgebildet, auf. Es ist auch denkbar, daß sich die Vorratsbehälter 3 und 4 jeweils in ihrem Aufbau voneinander unterscheiden in Anpassung an die auszuspritzenden Medien.

Bei einer Ausführungsform nach Figur 3 enthält die Gesamteinrichtung 13 zwei Vorratsbehälter 3 und 4, die über die flexiblen Leitungen 15 bzw. 16 mit einer Verdrängungseinrichtung 7 verbunden sind. Der Einfachheit halber ist hier nur eine Verdrängungseinrichtung 7 gezeichnet. Es ist jedoch notwendig, jedem Vorratsbehälter jeweils eine solche Verdrängungseinrichtung zuzuordnen.

Im Ausführungsbeispiel nach den Figuren 3 und 4 wird der Vorratsbehälter über seine Ausspritzdüse 3 gerade vom Füllanschluß 10 aufgenommen und gefüllt, während der Vorratsbehälter 3 vom Manipulator 11 in vorgesehener Weise verfahren wird und dabei das auszuspritzende Medium, dosiert von der Verdrängungseinrichtung 7, ausspritzt. In dieser Zeit kann der Vorratsbehälter 4 gefüllt werden. Ist der Vorratsbehälter 3 entleert, so kann er über den Manipulator 11 zu einem freien Füllanschluß 9 oder 10 gefahren und dort abgesetzt werden. Der inzwischen gefüllte Vorratsbehälter 4 kann danach sofort entnommen und mit diesem der Arbeitsvorgang fortgesetzt werden.

Es ist insgesamt gelungen einen sehr einfachen Aufbau einer solchen Einrichtung zu erreichen und gleichzeitig die bisherigen Dosierschwierigkeiten zu beseitigen.

Liste der verwendeten Bezugszeichen

1 Ausspritzdüse
2 Ausspritzdüse
3 Vorratsbehälter
4 Vorratsbehälter
5 Trennung
6 Trennung
7 Verdrängungseinrichtung
8 Versorgungsstation
9 Füllanschluß
10 Füllanschluß
11 Transporteinrichtung
12 Füllventil
13 Einrichtung
14 Einrichtung
15 flexible Leitung
16 flexible Leitung
17 Verdrängungskörper
18 Verdrängungsseite
19 Strömungsmittelzylinder
20 Kammer
21 Kolbenstange
22 Zylinderraum
23 Zylinderraum
24 Mengenregelventil
25 Strömungsmittelpumpe
26 Endschalter
27 Endschalter
28 Steuerung
29 Leitung
30 Leitung
31 Leitung
32 Leitung

33 Druckbegrenzungsventil
34 Leitung
35 Leitung
36 Leitung
37 Ständer
38 Leitung

**Ansprüche**

1. Einrichtung zum dosierten Ausspritzen viskoser Medien, mit mindestens einer Ausspritzdüse und einem Vorratsbehälter mit einer inneren Trennung zwischen Vorrats- und Verdrängungsseite, der mit einer Verdrängungseinrichtung verbunden ist, wobei die Verdrängungsmenge pro Zeit oder Weg mittels der Verdrängungseinrichtung bestimmbar ist, gekennzeichnet durch mindestens einen bewegbaren Vorratsbehälter (3,4) mit je einer Ausspritzdüse (1,2), durch mindestens einen mit einer Versorgungsstation (8) verbundenen oder verbindbaren Füllanschluß (9,10), welch jeder mit einem von einer Transporteinrichtung (11) auch zusammen mit der Ausspritzdüse (1,2) bewegbaren Vorratsbehälter (3,4) lösbar verbunden werden kann.

2. Einrichtung nach Anspruch 1, dadurch gekennzeichnet, daß zwischen Füllanschluß (9,10) und Versorgungsstation (8) mindestens ein Füllventil (12) vorgesehen ist.

3. Einrichtung nach mindestens einem der Ansprüche 1 und 2, gekennzeichnet durch mindestens eine Transporteinrichtung (11), mit welcher mindestens ein Vorratsbehälter (3,4) so positionierbar ist, daß er über den Füllanschluß (9,10) gefüllt werden kann.

4. Einrichtung nach mindestens einem der Ansprüche 1 bis 3, dadurch gekennzeichnet, daß als Vorratsbehälter (3,4) ein handelsüblicher Druckspeicher verwendet wird.

5. Einrichtung nach mindestens einem der Ansprüche 1 bis 4, gekennzeichnet durch mindestens zwei mit einer Versorgungsstaton (8) verbundenen oder verbindbaren Füllanschlüsse (9,10), mindestens einer Transporteinrichtung (11) sowie mindestens zwei Vorratsbehältern (3,4) zur Füllung mindestens eines Vorratsbehälters (4), während ein anderer Vorratsbehälter (3) gleichzeitig entleert werden kann.

6. Einrichtung mindestens nach Anspruch 5, dadurch gekennzeichnet, daß die Füllanschlüsse (9,10) an einem von der Transporteinrichtung (11) erreichbaren Ort in der Einrichtung (13,14) vorgesehen sind.

7. Einrichtung nach mindestens einem der Ansprüche 1 bis 6, dadurch gekennzeichnet, daß jeder Vorratsbehälter (3,4) über eine flexible Leitung (15,16) mit der Verdrängungseinrichtung (7) verbunden ist.

8. Einrichtung nach mindestens einem der Ansprüche 1 bis 7, dadurch gekennzeichnet, daß die Verdrängungseinrichtung (7) einen beweglichen, betätigbaren Verdrängungskörper (17) aufweist, wobei der Raum zwischen Verdrängungskörper (17) und Verdrängungsseite (18) des Vorratsbehälters (3,4) mit einem im wesentlichen inkompressiblen Medium gefüllt ist.

9. Einrichtung nach mindestens einem der Ansprüche 1 bis 8, dadurch gekennzeichnet, daß das verdrängbare Volumen eines jeden Vorratsbehälters (3,4) dem Bedarf für einen zugeordneten Arbeitszyklus entspricht.

10. Einrichtung nach mindestens einem der Ansprüche 1 bis 9, dadurch gekennzeichnet, daß die Verdrängungseinrichtung (7) mindestens einen Strömungsmittelzylinder (19) aufweist, mit mindestens einem beweglichen Kolben (17) als Verdrängungskörper.

11. Einrichtung nach mindestens einem der Ansprüche 1 bis 10, dadurch gekennzeichnet, daß der Strömungsmittelzylinder (19) mindestens eine mit dem Kolben (17) verbundene Kolbenstange (21) aufweist, zur Abtastung des Verdrängungsweges des Kolbens (17) und/oder zur Verbindung mit einem Verschiebemotor.

12. Einrichtung nach mindestens einem der Ansprüche 1 bis 11, dadurch gekennzeichnet, daß der der Verdrängerseite (22) abgewandte Zylinderraum (23) über ein Mengenregelventil (24) mit einer Strömungsmittelpumpe (25) verbunden ist.

13. Einrichtung nach mindestens einem der Ansprüche 1 bis 12, dadurch gekennzeichnet, daß jeder Vorratsbehälter (3,4) als handelsüblicher Druckspeicher mit zwei Kammern (18,20) ausgebildet ist, dessen eine Kammer (18) die Verdrängungsseite und dessen andere Kammer (20) die Vorratsseite bildet.

14. Einrichtung nach mindestens einem der Ansprüche 1 bis 13, dadurch gekennzeichnet, daß als Transporteinrichtung (11) ein stationärer Manipulator verwendet wird.

## Claims

1. Equipment for the metered spraying of viscous media with at least one spray nozzle and a stock container with an interior partition between stock side and expulsion side, which container is equipped with an expulsion equipment, wherein the expelled quantity per unit of time or travel is determinable by means of the expulsion equipment, characterised by at least one movable stock container (3, 4) each with a respective spray nozzle (1, 2), by at least one filling connection (9, 10), which is connected or connectable with a supply station (8) and each of which can be detachably connected with a stock container (3, 4) movable also together with the spray nozzle (1, 2) by a transport equipment (11).

2. Equipment according to claim 1, characterised thereby, that at least one filling valve (12) is provided between the filling connection (9, 10) and the supply station (8).

3. Equipment according to at least one of the claims 1 and 2, characterised by at least one transport equipment (11), by which at least one stock container (3, 4) is so positionable that it can be filled by way of the filling connection (9, 10).

4. Equipment according to at least one of the claims 1 to 3, characterised thereby, that a commercially usual pressure reservoir is used as stock container (3, 4).

5. Equipment according to at least one of the claims 1 to 4, characterised by at least two filling connections (9, 10), which are connected or connectable with a supply station (8), at least one transport equipment (11) as well as at least two stock containers (3, 4) for the filling of at least one stock container (4), while another stock container (3) can be emptied at the same time.

6. Equipment according to at least claim 5, characterised thereby, that the filling connections (9, 10) are provided in the equipment (13, 14) at a place which can be reached by the transport equipment (11).

7. Equipment according to at least one of the claims 1 to 6, characterised thereby, that each stock container (3, 4) is connected by way of a flexible duct (15; 16) with the expulsion equipment (7).

8. Equipment according to at least one of the claims 1 to 7, characterised thereby, that the expulsion equipment (7) displays a movable and acutable expulsion body (17), wherein the space between the expulsion body (17) and the expulsion side of the stock container (3, 4) is filled by a substantially incompressible medium.

9. Equipment according to at least one of the claims 1 to 8, characterised thereby, that the expellable volume of each stock container (3, 4) corresponds to the requirement for an associated working cycle.

10. Equipment according to at least one of the claims 1 to 9, characterised thereby, that the expulsion equipment (7) displays at least one flow medium cylinder (19) with at least one movable piston (17) as expulsion body.

11. Equipment according to at least one of the claims 1 to 10, characterised thereby, that the flow medium cylinder (19) displays at least one piston rod (21), which is connected with the piston (17), for the sensing of the expulsion travel of the piston (17) and/or for connection with a displacing motor.

12. Equipment according to at least one of the claims 1 to 11, characterised thereby, that the cylinder space (23), which is remote from the expulsion side (22), is connected by way of a quantityregulating valve (24) with a flow medium pump (25).

13. Equipment according to at least one of the claims 1 to 12, characterised thereby, that each stock container (3, 4) is constructed as commercially usual pressure reservoir with two chambers (18, 20), the one chamber (18) of which forms the expulsion side and the other chamber (20) of which forms the stock side.

14. Equipment according to at least one of the claims 1 to 13, characterised thereby, that a stationary manipulator is used as transport equipment (11).

## Revendications

1. Installation pour l'éjection dosée de matières visqueuses, comportant au moins une buse d'éjection et un récipient qui présente une séparation interne entre le côté d'alimentation et le côté de refoulement et qui est raccordé à un dispositif de refoulement, étant entendu que la quantité de matière refoulée par unité de temps ou de trajet peut être déterminée au moyen du dispositif de refoulement, caractérisée par au moins un récipient mobile (3, 4) équipé d'une buse d'éjection (1, 2), et par au moins un raccord de remplissage (9, 10) qui est en communication ou peut être mis en communication avec un poste d'alimentation (3), et qui peut être raccordé de façon détachable à un récipient mobile (3, 4) pouvant être déplacé conjointement avec la buse d'éjection (1,2) par un dispositif transporteur (11).

2. Installation suivant la revendication 1, caractérisée en ce qu'au moins une valve de remplissage (12) est prévue entre le raccord de remplissage (9, 10) et le poste d'alimentation (8).

3. Installation suivant l'une ou l'autre des revendications 1 et 2, caractérisée par au moins un dispositif transporteur (11), au moyen duquel au moins un récipient (3, 4) peut être positionné de telle façon qu'il puisse être rempli par l'intermédiaire du raccord de remplissage (9, 10).

4. Installation suivant au moins une des revendications 1 à 3, caractérisée en ce qu'un accumulateur de pression classique est utilisé à titre de récipient (3, 4).

5. Installation suivant au moins une des revendications 1 à 4, caractérisée par au moins deux raccords de remplissage (9, 10), raccordés ou pouvant être raccordés à un poste d'alimentation (8), et par au moins un dispositif transporteur (11) et au moins deux récipients (3, 4) de telle sorte qu'au moins un récipient (4) puisse être rempli, tandis qu'un autre réservoir (3) est en cours de vidage.

6. Installation suivant la revendication 5, caractérisée en ce que les raccords de remplissage (9, 10) sont installés en un endroit dans l'installation (13, 14) pouvant être atteint par le dispositif transporteur (11).

7. Installation suivant au moins une des revendications 1 à 6, caractérisée en ce que chaque récipient (3, 4) est raccordé par une conduite flexible (15, 16) au dispositif de refoulement (7).

8. Installation suivant au moins une des revendications 1 à 7, caractérisée en ce que le dispositif de refoulement (7) comporte un corps de refoulement (17) pilotable mobile, l'espace entre le corps de refoulement (17) et le côté de refoulement (18) du récipient (3, 4) étant rempli d'un fluide en substance incompressible.

9. Installation suivant au moins une des revendications 1 à 8, caractérisée en ce que le volume de chaque récipient (3, 4), pouvant être déplacé par refoulement, correspond aux besoins d'un cycle de travail associé.

10. Installation suivant au moins une des revendications 1 à 9, caractérisée en ce que le dispositif de refoulement (7) comporte au moins un cylindre à fluide hydraulique (19) comportant au moins un piston mobile (17) en tant que corps de refoulement.

11. Installation suivant au moins une des revendications 1 à 10, caractérisée en ce que le cylindre à fluide hydraulique (19) comporte au moins une tige de piston (21) reliée au piston (17), en vue de la détection de la course de refoulement du piston (17) et/ou en vue d'une liaison à un moteur coulissant.

12. Installation suivant au moins une des revendications 1 à 11, caractérisée en ce que la chambre (23) du cylindre, opposée au côté de refoulement (22), est raccordée par l'intermédiaire d'un régulateur de débit (24) à une pompe à fluide hydraulique (25).

13. Installation suivant au moins une des revendications 1 à 12, caractérisée en ce que chaque récipient (3, 4) a la forme d'un accumulateur de pression classique à deux chambres (18, 20), une chambre (18) formant le côté de refoulement et l'autre chambre (20) formant le côté d'alimentation.

14. Installation suivant au moins une des revendications 1 à 13, caractérisée en ce qu'un manipulateur fixe est utilisé en tant que dispositif transporteur (11).

Fig 1

EP 0 271 640 B1

14

Hydraulikstation mit
Verschiebemotor

37

7

35

19

15

Bajonetverschl

12

Dosierer

11

3

9

1 Düse

Füllventil

1400
Schwenkbereich

8

Faßpumpe

Schaltschrank

*Fig 2*

Fig 3

Fig 4

Schallschrank

Dosierer

Düse

3

Schwenkbereich

1400

11

10

16

Füllventil

15

Hydraulikstation mit Verschiebemotor

7

19

4

2

6

12

8

Faßpumpe